# EUROPEAN PATENT APPLICATION

(11) **EP 2 106 856 A1**
(43) Date of publication of application: **07.10.2009**
(21) Application number: 08006713.5
(22) Date of filing: 02.04.2008
(51) Int. Cl.: B01L 3/00, F16L 37/02

(54) **Microfluidic component capable of self-sealing**

(71) Applicant: Danmarks Tekniske Universitet - DTU, 2800 Kongens Lyngby (DK)
(72) Inventor: Snakenborg, Detlef, 2900 Hellerup (DK)
(74) Representative: Sundien, Thomas

(57) **Abstract**

A microfluidic component (100) for building a microfluidic system is provided. The microfluidic component (100) can be mounted on a microfluidic breadboard (202) in a manner that allows it to be connected to other microfluidic components (204,206) without the requirement of additional devices. The microfluidic component (100) comprises at least one tube piece (102) for transporting a fluid. The microfluidic component (100) also comprises means for maintaining pressure (104), used to apply pressure between this tube piece (102) and a tube piece (208,210) housed in another microfluidic component (208,210). Applying the pressure causes the two tubes to be fluidically sealed.

## Description

### FIELD OF THE INVENTION

This invention, in general, relates to the field of microfluidic technology. In particular, the present invention provides a microfluidic component capable of self-sealing for building a microfluidic system.

### BACKGROUND OF THE INVENTION

Since the first integrated circuit was invented, miniaturization has become an important research topic in both electronic and non-electronic devices. In the late 1970s, miniaturization was extended to mechanical devices with electronics, which is now known as microelectromechanical systems (MEMS). MEMS research has been largely encouraged by the first introduction of miniaturized total analysis systems, and MEMS systems are widely employed in areas from biomedical and drug delivery to space and fuel cell microfluidic systems. These systems have been reduced in size to micro scale for the realization of a fully integrated microfluidic system such as lab-on-a-chip or a micro total analysis system. Major advantages of miniaturization are the drastic decrease in chemical reaction time and less consumption of expensive chemical reagents as well as enhancement of reliability. As these fully integrated microfluidic systems are expensive to realize in a chip or analysis system, it is essential that the functionality is as desired. It is therefore required that the systems are thoroughly tested prior to the final miniaturization. Microfluidic systems are therefore well-suited in an experiential setting or in the context of research.

Microfluidic systems are typically built up of a plurality of components such as microfluidic chips, valves or components serving as links and delays. For such systems the breadboard concept, known from e.g. electronic test circuits, has been adapted. On these microfluidic breadboards the microfluidic components are interconnected, making is possible to test, alter and retest components in a synchronous fluid management environment. However, unlike electronic breadboards there is no standardization of discrete microfluidic components.

The trend of microfluidics goes more and more to hybrid systems since highly integrated devices are difficult to realize due to their complexity. This means that only a limited functionality is integrated in the microchip. Additional functions are realized by conventional or miniaturized external components that are connected to the microfluidic component using flexible tubes. The interconnections between the tubes are still a challenge owing to the small dimensions and the extremely low volume of fluids.

The most common technique to interconnect tubes and components is by using screw fittings. The disadvantage of this technique is that very small fittings have to be screwed into components, which is difficult, especially on small components, limiting miniaturization and requiring practical skills.

Another technique used to interconnect microfluidic components on a microfluidic breadboard includes using a board, which contains microchannels to connect the individual microfluidic components. The disadvantage of systems using this technique is that separate sealing rings or tube packings are needed in order to obtain a leakage free system. Further, the limitation of such systems is that they are not compatible with components purchased from third party vendors.

### OBJECT AND SUMMARY OF THE INVENTION

The objective of the present invention is to solve the above-mentioned problems.

In one embodiment the microfluidic component comprises a flexible tube piece, wherein at least one end of the tube piece is adapted to be sealable connected to an end of a second tube piece in a second microfluidic component, wherein the microfluidic component comprises means for maintaining a pressure from the end of the tube piece towards an end of the second tube piece in the second microfluidic component. The advantage of this microfluidic component is that sealed connections to other microfluidic components can be obtained. Further, no extra parts or devices are needed to make these leakage free connections, and the connections between different microfluidic components can easily be configured and reconfigured. Hereby microfluidic systems can be built without the need for any special skills or tools.

In another embodiment the tube piece of the microfluidic component is made from a flexible material and/or an elastomeric material. Hereby the tube piece can be easily moved from a connected position to an unconnected position. Further, an elastomeric tube piece is well suited for establishing sealed connections between tube pieces.

In yet another embodiment the means for maintaining a pressure is embodied as a mechanical mechanism. Such mechanical mechanism can be embodied as a lever, a spring, a screw or the like. The advantage of such mechanical mechanisms is that they are very simple to construct and operate, whereby the tube piece of the microfluidic component can be easily moved.

In a further embodiment the means for maintaining a pressure is an electrical mechanism. The advantage of this embodiment is that such means are easy to control, e.g. from a remote position relative to the microfluidic component.

In one embodiment the means for maintaining a pressure is thermally activated. Apart from the advantages listed above, this embodiment can advantageously influence (e.g. temperature control) the fluidic flow in the tube pieces thermally.

In another embodiment the microfluidic component comprises mounting means enabling mounting of said component to a board for connecting said component to other microfluidic components. The advantage of this embodiment is that whole integrated fluidic systems can be configured and reconfigured, serving desired purposes.

In a further embodiment the microfluidic component comprises means for directly connecting said component to another microfluidic component. Hereby the above-mentioned board can be omitted without jeopardizing the sealed connection(s) between the microfluidic components.

The present invention also concerns a method for creating a sealed connection between the ends of flexible tube pieces in a first and a second microfluidic component, respectively, wherein the connection is obtained by applying a pressure between an end of the tube piece in the first microfluidic component and an end of the tube piece in the second microfluidic component. Here the advantages are as described above.

### BRIEF DESCRIPTION OF THE DRAWINGS

Further aspects of the present invention together with additional features contributing thereto and advantages occurring there from will be apparent from the description of preferred embodiments of the present invention which are shown in the accompanying figures, where
figure 1 illustrates the principle of a microfluidic component according to the present invention;
figure 2 illustrates a microfluidic system, where a microfluidic component is to be connected according to the present invention;
figure 3 illustrates a microfluidic system, where a microfluidic component has been connected according to the present invention;
figure 4 illustrates the principle of a microfluidic component, where the means for maintaining a pressure is a mechanical mechanism comprising a lever;
figure 5 illustrates the principle of a microfluidic component, where the means for maintaining a pressure is a mechanical mechanism comprising a spring;
figure 6 illustrates a microfluidic component, where the tube can be adjusted by using a cam;
figure 7 illustrates a microfluidic component comprising two tube pieces arranged at the two sides, where the tube pieces can exit the component;
figure 8 illustrates a microfluidic component comprising two parallel tube pieces, which can be connected to two or four other microfluidic components;
figures 9a-e illustrate a microfluidic component having an angled, a curved, a U-shape, an S-shape and a Y-shape, respectively;
figure 10 illustrates a bottom view of a microfluidic component comprising a number of protrusions for interaction with for instance a breadboard comprising a number of indentations, enabling a male/female connection;
figure 11 illustrates a bottom view of a microfluidic component comprising a number of indentations for interaction with for instance a breadboard comprising a number of protrusions, enabling a male/female connection.

### DESCRIPTION OF EMBODIMENTS

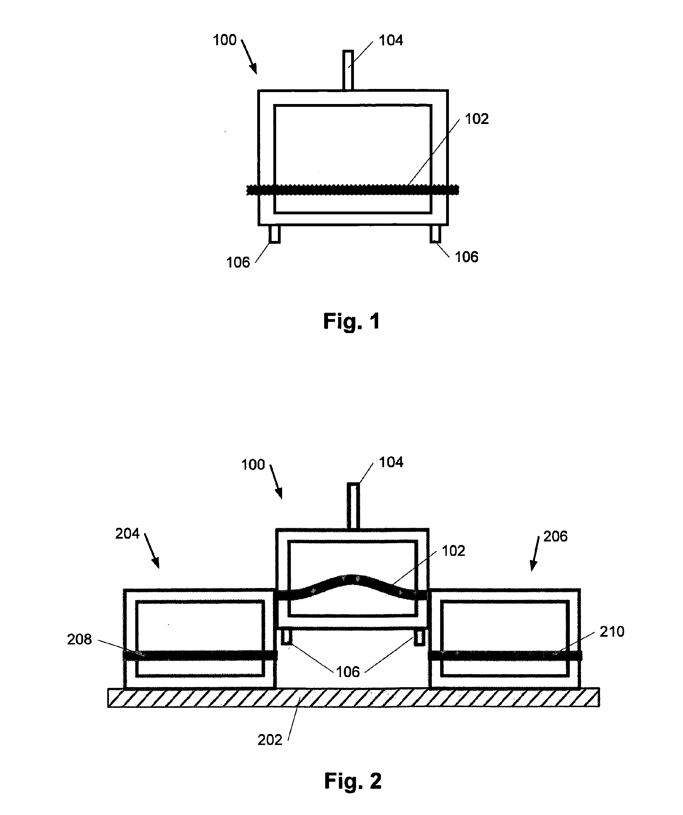

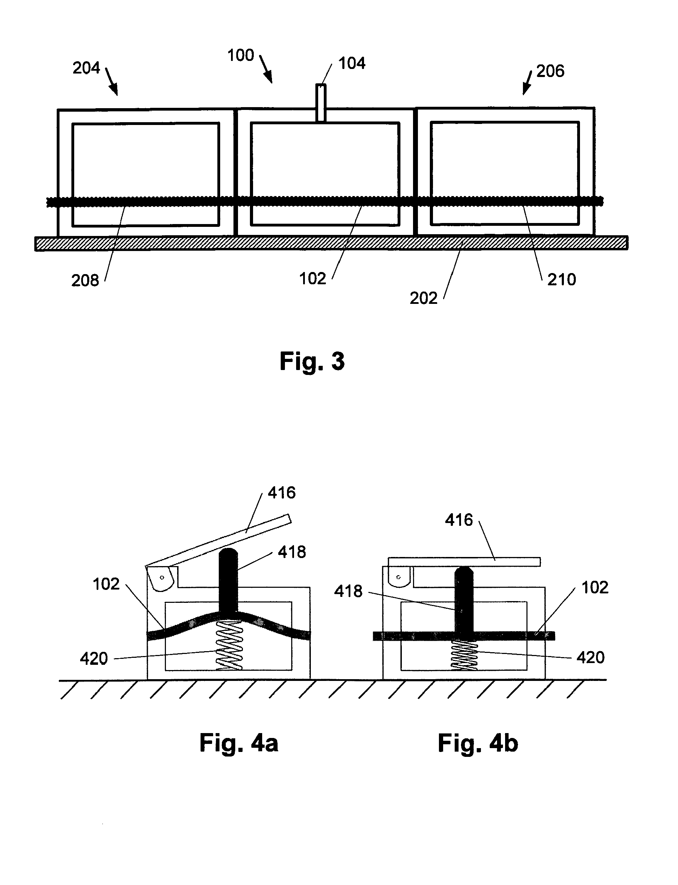

Figure 1 illustrates a microfludic component 100 in accordance with one embodiment of the invention. The microfludic component 100 comprises a tube piece 102, means for maintaining a pressure 104 and protrusions 106. The tube piece 102 extends out of the sides (not indicated) of the microfluidic component 100. This position of the tube piece 102 is maintained by the means for maintaining a pressure 104. When the means for maintaining a pressure 104 is deactivated (not shown) the tube piece 102 does not extend out of the microfluidic component 100. The microfludic component 100 can be connected physically to other microfluidic components, either directly or by placing them on a microfluidic breadboard. The latter is enabled placing the protrusions 106 of the microfludic component 100 in corresponding holes or indentations on a microfluidic breadboard. Arranging the microfludic component 100 on the microfludic breadboard provides the microfludic component 100 with an alignment and a fixation. The microfluidic components are mounted such that the tube pieces 102 housed in the microfluidic components can interface with each other and thereby establish a sealed connection between the tube pieces 102 by activating the means for maintaining a pressure 104 of the microfluidic component 100. The tube pieces 102 can be flexible or elastomeric and be made of e.g. a polymer, rubber or the like. Further, the tube pieces 102 can be made of a solvent resistant material such that they transport fluids without any wear and tear. The tube pieces 102 could also be a fiber optic cable. In one embodiment of the invention the means for maintaining a pressure 104 is a mechanical mechanism such as a lever, spring, screw or the like (see figures 4-6 for embodiments). In another embodiment of the invention the means for maintaining a pressure 104 is an electrical mechanism. In yet another embodiment of the invention the means for maintaining a pressure 104 is activated thermally. In a further embodiment of the present invention the tube piece 102 of the microfluidic component 100 comprises sealing pads (not shown) or the like at each end of the tube piece 102. Hereby the contact face between the tube piece 102 and tube pieces comprised in other microfluidic components can be larger than the diameter of the tube piece 102, ensuring a better sealed contact between the tube pieces. The pads can also have different geometries, e.g. male/female, suitable for obtaining a sealed contact.

Figure 2 illustrates a microfluidic system (not indicated) comprising a microfluidic breadboard 202 and microfluidic components 100, 204, 206. The microfluidic component 100 is to be mounted on the microfluidic breadboard 202 between the two microfluidic components 204, 206. The microfluidic component 100 comprises a tube piece 102, means for maintaining a pressure 104 and protrusions 106 and has a functionality resembling the one described in figure 1. The microfluidic components 204, 206 comprise tube pieces 208, 210, respectively. By means of protrusions (not shown), the microfluidic components 204, 206 have been mounted on the microfluidic breadboard 202. The means for maintaining a pressure 104 has not been activated, whereas the tube piece 102 does not extend out of the microfluidic component 100. In another embodiment of the invention the microfluidic components 204, 206 can have a different functionality and dimension.

Figure 3 illustrates the microfluidic system (not indicated) described in figure 2, where the microfluidic component 100 has been placed between the two microfluidic components 204, 206 on the microfluidic breadboard 202. The means for maintaining pressure 104 has been activated, whereby the ends (not indicated) of the tube piece 102 extend out of the microfluidic components 100. Thus, the tube piece 208 is sealable connected to the tube piece 102, and the tube piece 206 is sealable connected to the tube piece 102. The necessary stress required for making the sealable connections between the tube pieces 102, 208, 210 is realized by the means for maintaining pressure 104. In other words, the impermeable sealing is realized by pressing the ends of the tube pieces 102, 208, 210 against each other.

Figures 4a and 4b illustrate the principle of a microfluidic component of the present invention, where the means for maintaining pressure is a mechanical mechanism comprising a lever. The microfluidic component comprises a tube piece 102, a lever 416, a bar 418 and a spring 420. The lever 416 is hinged at the side of the microfluidic component. The tube piece 102 has a length that enables it to extend out of the microfluidic component. Furthermore, the tube piece 102 is arranged between the spring 420 and the bar 418. When the lever 416 is pressed downwards (activated), the bar 418 is also forced downwards leading to a compression of the spring 420. Simultaneously, the part of the tube piece 102 arranged between the bar 418 and spring 420 is moved downwards, whereby the ends of the tube piece 102 extend out the of microfluidic component. When the lever 416 has been pressed down (activated), a mechanical mechanism (not shown) ensures that the spring 420 remains in a compressed state and thereby a maintained extension of the ends of the tube piece 102 out of the microfluidic component as depicted in figure 4b. When the lever 416 is pressed downwards (activated) again, a mechanical mechanism ensures that the potential energy of the compressed spring 420 is released. Thereby the part of the tube piece 102 arranged between the bar 418 and the spring 420 is moved upwards, and the tube piece 102, spring 420, bar 418 and lever 416 return to a position as depicted in figure 4a. By using a lever 416 only a small force is needed to activate the microfluidic component.

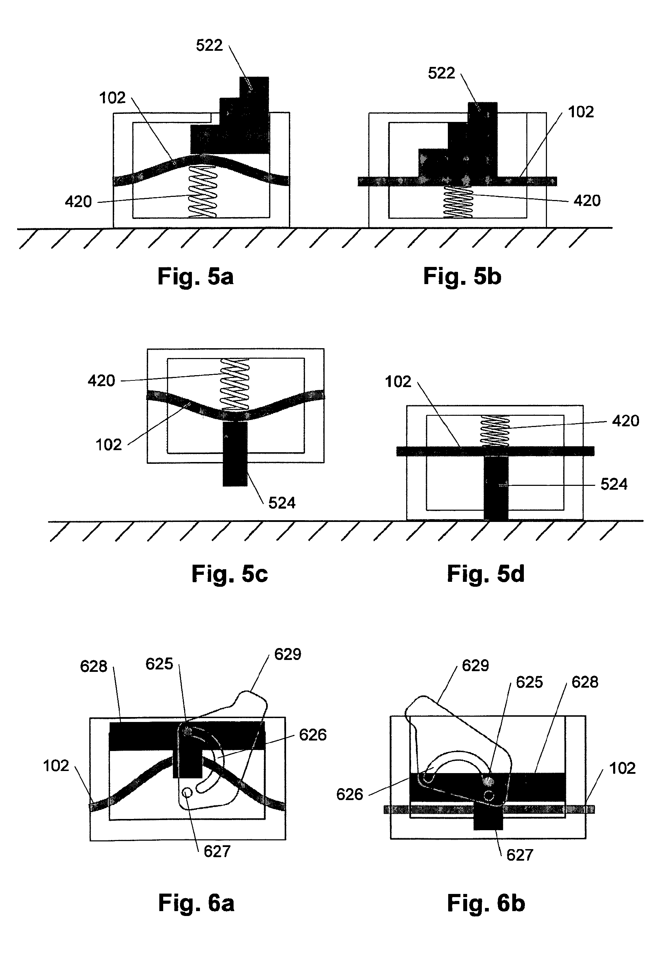

Figures 5a-d illustrate the principle of different microfluidic components, where the means for maintaining pressure is a mechanical mechanism comprising a spring. Figures 5a and 5b illustrate a microfluidic component in two different positions or states. The microfluidic component comprises a tube piece 102, a spring 420 and a member 522. The length of the tube piece 102 enables it to extend out of the microfluidic component. Furthermore, the tube piece 102 is arranged between the spring 420 and the member 522. When the member 522 is pressed downwards the spring 420 is compressed, and the part of the tube piece 102 arranged between the spring 420 and the member 522 is moved downwards. As illustrated in figure 5b the member 522 can be moved in a position, where a surface part (not indicated) of the member 522 rests against an inner surface (not indicated) of the microfluidic component. Hereby the spring 420 remains in a compressed state and the tube piece 102 maintains its position, where the ends extend out of the microfluidic component. When the member 522 is moved out of the position depicted on figure 5b, the potential energy of the spring 420 is released. Hereby the tube piece 102 returns to a position, where none of its ends extend out of the microfluidic component as depicted in figure 5a.

Figures 5c and 5d illustrate a microfluidic component in two different positions or states. The microfluidic component comprises a tube piece 102, a spring 420 and a bar 524. The tube piece 102 has a length that enables it to extend out of the microfluidic component. Furthermore, the tube piece 102 is arranged between the spring 420 and bar 524. The bar 524 can be moved from the bottom side of the microfluidic component. When the microfluidic component is placed on e.g. a microfluidic breadboard (not shown), the bar 524 is pressed upwards and the spring 420 is compressed, whereby the position of the tube piece 102 arranged between the spring 420 and the bar 524 moves upwards relative to the microfluidic component. Hereby the end of the tube piece 102 extends out of the microfluidic component as illustrated in figure 5d. When the microfluidic component is moved from microfluidic breadboard (not shown) the potential energy of the spring 420 is released, and the ends of the tube piece 102 are moved into the microfluidic component as depicted in figure 5c.

Figure 6 illustrates a microfluidic component, where the position of the tube piece 102 can be adjusted by using a cam 629. The microfluidic component comprises a tube piece 102, a cam 629 and a tube holder 628. The tube piece 102 is arranged in the tube holder 628, vertically moveable inside the microfluidic component. The tube holder 628 comprises a tap 625 positioned in an elongated curved hole 626 of the cam 629. Furthermore, the cam 629 is hinged to the microfluidic component and pivotably around the axis 627. When the cam 629 is moved from the position depicted in figure 6a to the position depicted in figure 6b, it causes a vertical movement of the tube holder 628. This movement of the tube holder 628 is guided by the cam 629 as the tap 625 is guided from one end (not indicated) of the elongated curved hole 626 to the other end (not indicated). The movement of the cam 629 from the position depicted in figure 6a to the position depicted in figure 6b causes a movement of the tube piece 102 such that its ends extend out of the microfluidic component as depicted in figure 6b.

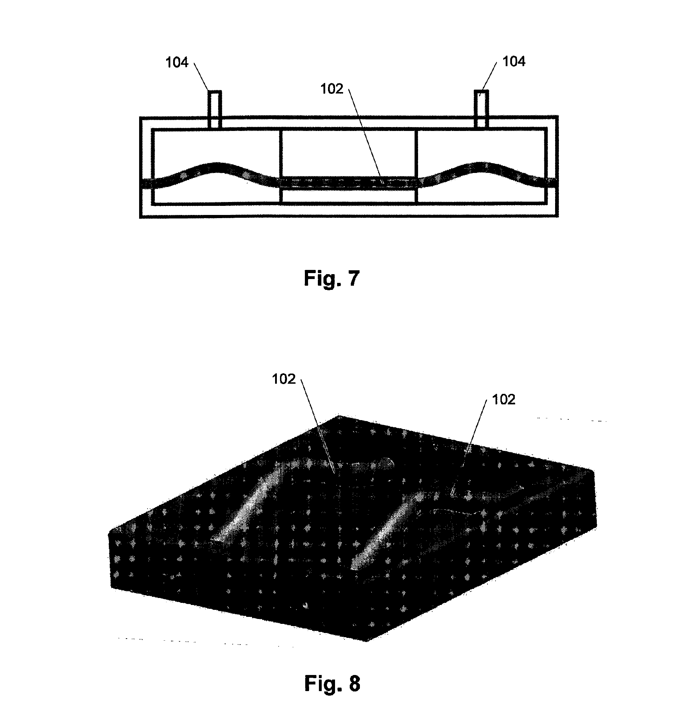

Figure 7 illustrates a microfluidic component comprising a tube piece 102 arranged such that each end of the tube piece 102 can be moved separately. The microfluidic component comprises a tube piece 102 and two means for maintaining pressure 104. The means for maintaining pressure 104 and the way that the two ends of the tube piece 102 can be moved correspond to the principles described in figure 1. Hence the microfluidic component departs from this embodiment by comprising two means for maintaining pressure that can be used to move each end of the tube piece 102 separately. In another embodiment of the invention the tube piece 102 can only move out of one end of the microfludic component. The means for maintaining pressure 104 can also be embodied as described above.

Figure 8 illustrates a microfluidic component comprising two parallel tube pieces 102, which can be connected to at least two and maximum four other microfluidic components. The tube pieces 102 are depicted in a state where they do not extend out of the microfluidic component. By activating means for maintaining pressure (not shown) the ends of the tube pieces 102 can extend out of the microfluidic component. Such means for maintaining pressure (not shown) can be used to move both tubes pieces 102 or each of them individually. In another embodiment the microfluidic component can comprise four means for maintaining pressure for an individual movement of each of the ends of the two tubes pieces 102.

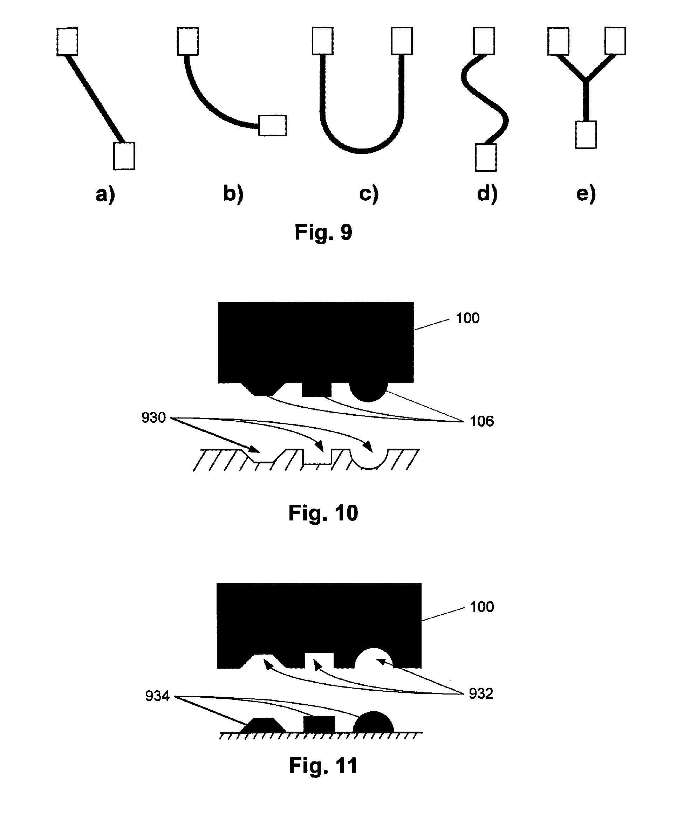

Figures 9a-e illustrate a tube piece 102 of a microfluidic component having an angled shape, a curved shape, a U-shape, a Z-shape and a Y-shape, respectively. These microfluidic components can be used to connect to other microfluidic components, e.g. on a microfluidic breadboard.

Figure 10 illustrates a side view of a microfluidic component comprising a number of protrusions 106 for interaction with for example a breadboard comprising a number of indentations 930, enabling a male/female connection.

Figure 11 illustrates a side view of a microfluidic component comprising a number of indentations 932 for interaction with for instance a breadboard comprising a number of protrusions 934, enabling a male/female connection.

While this invention has been described in detail with reference to certain preferred embodiments, it should be appreciated that the present invention is not limited to those precise embodiments. Rather, in view of the present disclosure, which describes the current best mode for practicing the invention, many modifications and variations would present themselves to those skilled in the art without departing from the scope and spirit of this invention, which is limited only by the appended claims.

### REFERENCES

- 100: microfluidic component
- 102: tube piece
- 104: means for maintaining pressure
- 106: protrusion
- 202: microfluidic breadboard
- 204: microfluidic component
- 206: microfluidic component
- 208: tube piece
- 210: tube piece
- 416: lever
- 418: bar
- 420: spring
- 522: member
- 524: bar
- 625: tap
- 626: elongated curved hole
- 627: cam axis
- 628: tube holder
- 629: cam
- 930: indentation
- 932: indentation
- 934: protrusion

## Claims

1. A microfluidic component comprising a flexible tube piece, wherein at least one end of said tube piece is adapted to be sealable connected to an end of a second tube piece in a second microfluidic component, wherein said microfluidic component comprises means for maintaining a pressure from said end of said tube piece towards an end of said second tube piece in said second microfluidic component.

2. A microfluidic component according to claim 1, wherein said tube piece is made from a flexible material.

3. A microfluidic component according to claims 1-2, wherein said tube is made from an elastomeric material.

4. A microfluidic component according to claims 1-3, wherein said means for maintaining a pressure is a mechanical mechanism.

5. A microfluidic component according to claims 1-4, wherein said mechanical mechanism is a lever.

6. A microfluidic component according to claims 1-5, wherein said mechanical mechanism is a spring.

7. A microfluidic component according to claims 1-6, wherein said mechanical mechanism is a screw.

8. A microfluidic component according to claims 1-7, wherein said means for maintaining a pressure is an electrical mechanism.

9. A microfluidic component according to claims 1-8, wherein said means for maintaining a pressure is thermally activated.

10. A microfluidic component according to claims 1-9, wherein said microfluidic component comprises mounting means enabling mounting of said component to a board for connecting said component to other microfluidic components.

11. A microfluidic component according to claims 1-10, wherein said microfluidic component comprises means for directly connecting said component to another microfluidic component.

12. A method for creating a sealed connection between ends of flexible tube pieces in a first and a second microfluidic component, respectively, wherein said connection is obtained by applying a pressure between an end of said tube piece in said first microfluidic component and an end of said tube piece in said second microfluidic component.
